(19) **Europäisches Patentamt European Patent Office Office européen des brevets**

(11) **EP 4 345 752 B1**

(12) **EUROPEAN PATENT SPECIFICATION**

(45) Date of publication and mention
of the grant of the patent:
**08.04.2026 Bulletin 2026/15**

(51) International Patent Classification (IPC):
**G06T 9/00** (2006.01)

(21) Application number: **22306441.1**

(52) Cooperative Patent Classification (CPC):
**G06T 9/40; G06T 9/001**

(22) Date of filing: **28.09.2022**

(54) **ENCODING/DECODING POSITIONS OF POINTS OF A POINT CLOUD COMPRISED IN CUBOID VOLUMES**

CODIERUNG/DECODIERUNG VON POSITIONEN VON PUNKTEN EINER PUNKTWOLKE IN QUADERFÖRMIGEN VOLUMEN

CODAGE/DÉCODAGE DE POSITIONS DE POINTS D'UN NUAGE DE POINTS COMPRIS DANS DES VOLUMES CUBOÏDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.04.2024 Bulletin 2024/14**

(73) Proprietor: **Beijing Xiaomi Mobile Software Co., Ltd.**
**Beijing 100085 (CN)**

(72) Inventors:
• **GAO, Shuo**
**BEIJING, 100085 (CN)**

• **TAQUET, JONATHAN**
**35160 TALENSAC (FR)**

(74) Representative: **RVDB Rennes**
**44 rue Lariboisière**
**35235 Thorigné-Fouillard (FR)**

(56) References cited:
• **"G-PCC codec description", no. n21244, 12 April 2022 (2022-04-12), XP030302337, Retrieved from the Internet <URL:https://dms.mpeg.expert/doc_end_user/documents/137_OnLine/wg11/MDS21244_WG07_N00271.zip N00271.docx> [retrieved on 20220412]**

## Description

FIELD

The present application generally relates to point cloud compression and, in particular to methods and apparatus of encoding/decoding, in/from a bitstream comprising at least one data unit, positions of points of a point cloud.

BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

As a format for the representation of 3D data, point clouds have recently gained traction as they are versatile in their capability in representing all types of physical objects or scenes. Point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such point clouds are typically static, colored and huge.

Another use case is in topography and cartography in which using 3D representations allow for maps that are not limited to the plane and may include the relief. Google Maps is now a good example of 3D maps but uses meshes instead of point clouds. Nevertheless, point clouds may be a suitable data format for 3D maps and such0 point clouds are typically static, colored and huge.

Virtual Reality (VR), Augmented Reality (AR) and immersive worlds have recently become a hot topic and are foreseen by many as the future of 2D flat video. The basic idea is to immerse the viewer in a surrounding environment, in contrast to a standard TV that only allows the viewer to look at the virtual world in front of him/her. There are several gradations in the immersivity depending on the freedom of the viewer in the environment. A point cloud is a good format candidate for distributing VR/AR worlds.

The automotive industry, and more particularly foreseen autonomous cars, are also domains in which point clouds may be intensively used. Autonomous cars should be able to "probe" their environment to make good driving decisions based on the detected presence and nature of their immediate nearby objects and road configuration.

A point cloud is a set of points located in a three-dimensional (3D) space, optionally with additional values attached to each of the points. These additional values are usually called attributes. Attributes may be, for example, three-component colors, material properties like reflectance and/or two-component normal vectors to a surface associated with a point.

A point cloud is thus a combination of geometry data (locations of the points in a 3D space usually represented by 3D cartesian coordinates x, y and z) and attributes.

Point clouds may be sensed by various types of devices like an array of cameras, depth sensors, lasers (light detection and ranging, also known as Lidars), radars, or may be computer-generated (for example in movie post-production). Depending on the use cases, points clouds may have from thousands to up to billions of points for cartography applications. Raw representations of point clouds require a very high number of bits per point, with at least a dozen of bits per cartesian coordinate x, y or z, and optionally more bits for the attribute(s), for instance three times 10 bits for the colors.

It is important in many applications to be able to either distribute point clouds to an end-user or store them in a server by consuming only a reasonable amount of bitrate or storage space, while maintaining an acceptable (or preferably very good) quality of experience. Efficient compression of these point clouds is a key point in order to make the distribution chain of many immersive worlds practical.

Compression may be lossy (like in video compression) for the distribution to and visualization by an end-user, for example on AR/VR glasses or any other 3D-capable device. Other use cases do require lossless compression, like medical applications or autonomous driving, to avoid altering the results of a decision obtained from the subsequent analysis of the compressed and transmitted point cloud.

Until recently, point cloud compression (aka PCC) was not addressed by the mass market and no standardized point cloud codec was available. In 2017, the standardization working group ISO/JCT1/SC29/WG11, aka Moving Picture Experts Group or MPEG, has initiated work items on point cloud compression. This has led to two standards, namely

- MPEG-I part 5 (ISO/IEC 23090-5) or Video-based Point Cloud Compression (aka V-PCC)

- MPEG-I part 9 (ISO/IEC 23090-9) or Geometry-based Point Cloud Compression (aka G-PCC)

The V-PCC coding method compresses a point cloud by performing multiple projections of a 3D object to obtain 2D patches that are packed into an image (or a video when dealing with dynamic point clouds). Obtained images or videos are then compressed using already existing image/video codecs, allowing for the leverage of already deployed image and video solutions. By its very nature, V-PCC is efficient only on dense and continuous point clouds because image/video codecs are unable to compress non-smooth patches as would be obtained from the projection of, for example, Lidar-sensed sparse geometry data.

The G-PCC coding method has two schemes for the compression of a sensed sparse geometry data.

The first scheme is based on an occupancy tree, being locally any type of tree among octree, quadtree or binary tree, representing the point cloud geometry. An occupied node (i.e. a node associated with a cuboid volume comprising at least one point of the point cloud) are split down until a certain size is reached, and occupied leaf nodes provide the 3D locations of points, for example at the center of these nodes. The occupancy information is carried by occupancy data (binary data, flag) signaling the occupancy status of each of the child nodes of nodes. By using neighbor-based prediction techniques, high level of compression of the occupancy data can be obtained for dense point clouds. Sparse point clouds are also addressed by directly coding the position of point within a node with non-minimal size, by stopping the tree construction when only isolated points are present in a node; this technique is known as Direct Coding Mode (DCM).

The second scheme is based on a predictive tree in which each node represents the 3D location of one point and the parent/child relation between nodes represents spatial prediction from parent to children. This method can only address sparse point clouds and offers the advantage of lower latency and simpler decoding than the occupancy tree. However, compression performance is only marginally better, and the encoding is complex, relatively to the first occupancy-based method, because the encoder must intensively look for the best predictor (among a long list of potential predictors) when constructing the predictive tree.

In both schemes, attribute (de)coding is performed after complete geometry (de)coding, leading practically to a two-pass (de)coding. Thus, the joint geometry/attribute low latency is obtained by using partitions of point cloud data that decompose the 3D space into sub-volumes that are coded independently, without prediction between the sub-volumes. This may heavily impact the compression performance when many partitions of point cloud data are used.

An important use case is the transmission of dynamic AR/VR point clouds. Dynamic means that the point cloud evolves with respect to time. Also, AR/VR point clouds are typically locally 2D as they most of time represent the surface of an object. As such, AR/VR point clouds are highly connected (or said to be dense) in the sense that a point is rarely isolated and, instead, has many neighbours.

Dense (or solid) point clouds represent continuous surfaces with a resolution such that cuboid volumes (small cubes) associated with points touch each other without exhibiting any visual hole in the surface.

Such point clouds are typically used in AR/VR environments and are viewed by the end user through a device like a TV, a smartphone or a headset. They are transmitted to the device or usually stored locally. Many AR/VR applications use moving point clouds, as opposed to static point clouds, that vary with time. Therefore, point cloud data is huge and must be compressed.

Nowadays, lossless compression based on an octree representation of the geometry of a point cloud frame (temporal instance of a point cloud) can achieve down to slightly less than a bit per point (1 bpp). This may not be sufficient for real time transmission that may involve several millions of points per point cloud frame with a frame rate as high as 50 frames per second (fps), thus leading to hundreds of megabits of data per second.

Consequently, lossy compression may be used with the usual requirement of maintaining an acceptable visual quality while compressing sufficiently to fit within the bandwidth provided by the transmission channel. In most of applications, real time transmission of the point cloud frames must be ensured, thus imposing complexity and latency constrains on the compression scheme. In many applications, bitrates as low as 0.1 bpp (10x more compressed than lossless coding) would already make possible real time transmission.

V-PCC can achieve such low bitrates by using lossy compression of video codecs that compress 2D frames (pictures) obtained from the projection of parts of the point cloud on a set of planes to obtain projection patches. The geometry of a point cloud frame is represented by these projection patches assembled into a frame, each patch being a small local depth map. However, V-PCC is not versatile and is limited to a narrow type of point clouds that do not exhibit locally complex geometry (like trees, hair) because the obtained projected depth map would not be smooth enough to be efficiently compressed by a video codec like HEVC or VVC.

Purely 3D compression techniques can handle any type of point clouds. It is still an open question whether 3D compression techniques can compete with V-PCC (or any projection + image coding scheme) on dense point clouds. Standardization is still under its way toward offering an extension (an amendment) of the current G-PCC codec to provide competitive lossy compression that would compress dense point clouds as good as V-PCC intra while maintaining the versatility of G-PCC that can handle any type of point clouds (dense, sparse such as Lidar based captured point clouds, 3D maps, etc..).

There are basically three main approaches to obtain a lossy scheme over the octree representation of a point cloud as done by the current G-PCC codec.

A first approach consists in down-sampling the whole point cloud to a smaller resolution, lossless encoding the down-sampled point cloud, decoding the encoded down-sampled point cloud, and then up-sampling the decoded down-sampled point cloud to its original resolution. Many up-sampling schemes have been proposed (like super resolution, artificial intelligence based up-sampling, learning-based 3D post-processing, etc.).

The first approach may provide good PSNR (Peak Signal to Noise Ratio) results when the down-sampling is not too aggressive, say no more than a factor 2 in each spatial direction. However, even if this first approach may provide good PSNR results, the visual quality of the up-sampled point cloud is disputable and not well controlled.

A second approach is to let the encoder "adjust" the point cloud locally such that the coding of the octree requires less bitrate. For this purpose, points of the point cloud may be slightly moved such as to obtain occupancy information better predicted by neighboring nodes, thus leading to a lossless encoding of a modified octree with a lowered bitrate. Unfortunately, this approach leads to only small bitrate reduction.

A third approach is based on the so-called TriSoup coding scheme that is under exploration in the standardization working group JTC1/SC29/WG7 of ISO/-IEC. The TriSoup coding scheme is the most promising of the three approaches but still requires some work before reaching maturity.

The TriSoup coding scheme provides a local model of the geometry of a point cloud by using a set of triangles without explicitly providing connectivity information, thus its name derived from "soup of triangles".

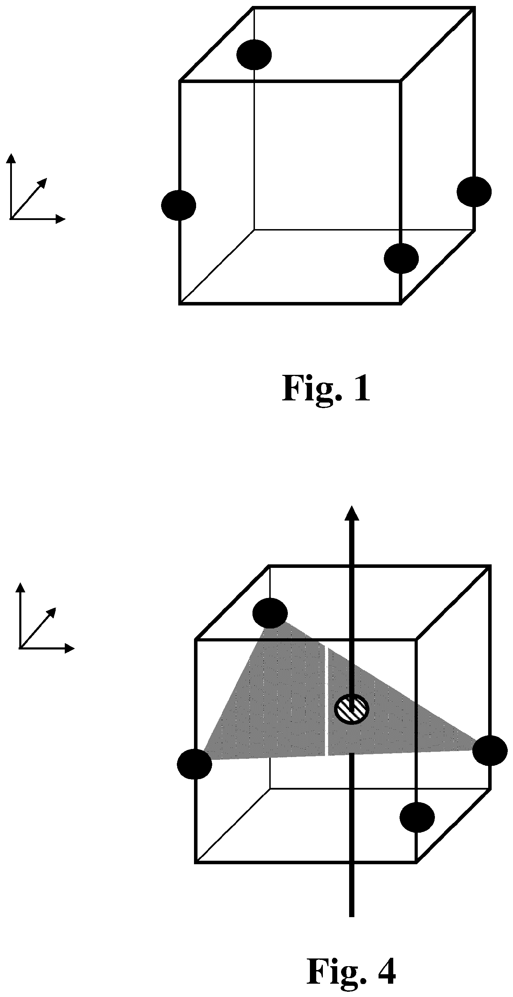

The point cloud geometry is represented in a three-dimensional coordinate system by a 3D tree (usually an octree) down to some resolution, say down NxNxN cuboid volumes (cubes) associated with leaf nodes where N may be 4, 8 or 16 for example. This tree is coded using a lossless coding scheme, like G-PCC for example. The tree itself does not require much bitrate because it does not go down to the deepest depth and has a small number of leaf nodes (cuboid volumes) compared to the number of points of the point cloud. Then, in each NxNxN cuboid volume, the point cloud geometry is modelled by some local model made of a set of triangles. Vertices of triangles are coded along edges of cuboid volumes associated with leaf nodes of the tree, as shown on **Figure 1.** Four vertices (dark black points) along edges of a cube are shown. These four vertices are used to form two triangles as discussed later.

The TriSoup coding scheme is not limited to a particular number of vertices located along edges of a cuboid volume but imposes at most one vertex per edge. The TriSoup coding scheme is not limited to a particular number of triangles in a particular cuboid volume. A vertex is shared among cuboid volumes having in common the edge to which the vertex belongs to. This means that at most one vertex is coded per edge belonging to at least one cuboid volume. By doing so, continuity of the local model is ensured through cuboid volumes associated with the leaf nodes of the tree.

Coding of vertices located on edges of a cuboid volume requires encoding of vertex information per vertex that comprises a vertex flag indicating if a vertex is present on an edge of the cuboid volume and, if present, the vertex position along the edge. A position of the vertex in the three-dimensional coordinate system is then obviously deduced from said vertex position along the edge and the position of the starting and ending vertices of the cuboid volume that define said edge.

The vertex flag may be coded by an adaptive binary arithmetic coder that uses one specific context for coding vertex flags. The vertex position along an edge of length $N=2^s$ may be coded with unitary precision by pushing (bypassing/not entropy coding) s bits into the bitstream.

In summary, coding a point cloud geometry using the TriSoup coding scheme requires coding of octree data (by G-PCC for example), occupancy information and Trisoup information representative of presence of vertices on edges of the cuboid volumes, and of vertices positions along said edges. The increase of encoded data due to the encoding of Trisoup information is more than compensated by the improvement of the reconstruction of the point cloud by triangles as discussed hereafter.

Inside a cuboid volume associated with a leaf node of the tree, at least one triangle is constructed from the vertices if at least three vertices are present on the edges of the cuboid volume. When more than three vertices are present on edges of a cuboid volume, more than one triangle may be constructed.

Multiple construction processes exist to construct such triangles.

In the current TriSoup coding scheme, a triangle is constructed by first determining a dominant direction along one of the three axes of the three-dimensional coordinate system in which the cuboid volume is represented; next, at least three vertices are ordered based on the determined dominant direction; and, finally, at least one triangle is constructed based on a list of at least three ordered vertices.

The dominant direction is determined by testing each of the three directions along the three axes and the one maximizing the total surfaces (seen along the tested direction) of triangles is kept as dominant direction.

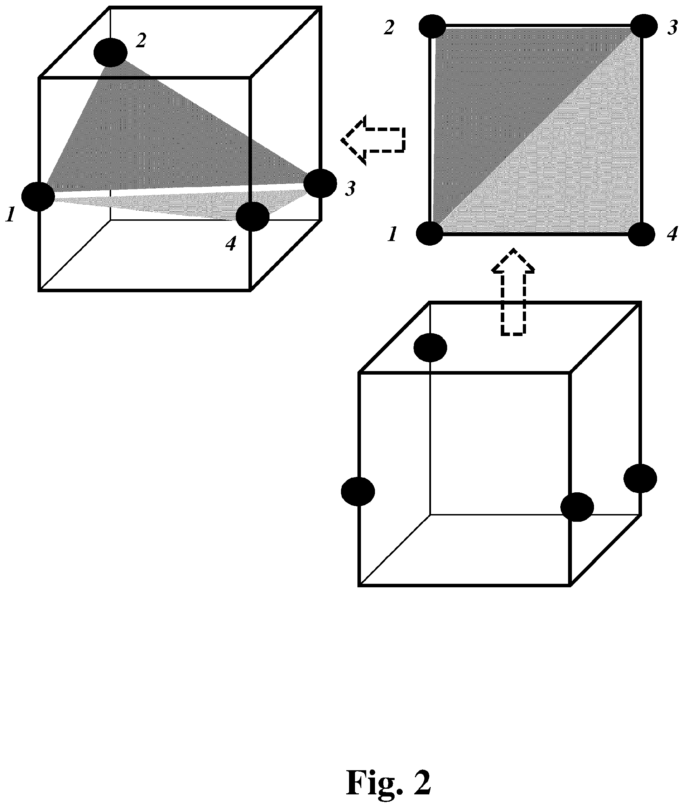

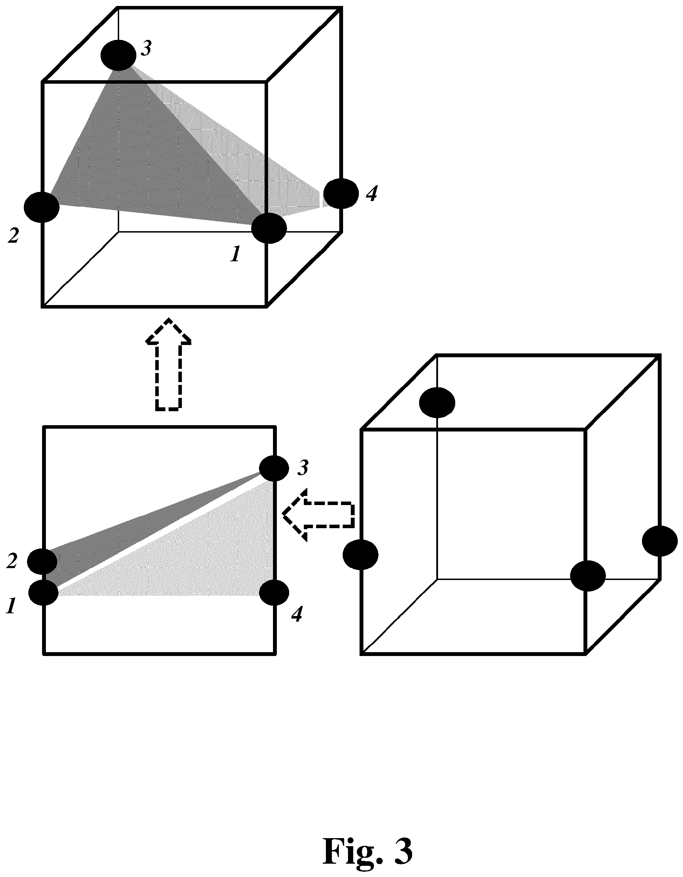

**Figures 2** and **3** show and illustrative example of a process to determine a dominant direction in accordance with current TriSoup.

For simplicity of the figures, only the tests over two axes are depicted on **Figures 2** and **3.**

**Figure 2** shows an illustrative example when the cuboid volume and four vertices (bottom-right) are projected along the vertical axis on a 2D plane (top-right). The four vertices are then ordered following a clockwise order relative to the center of the projected cuboid volume (a square). Then, two triangles are constructed following a fixed rule based on the ordered vertices (top-left). Here, the fixed rule is to construct triangles 123 and 134 when 4 vertices are involved. When 3 vertices are present, the only possible triangle 123 may be constructed. When 5 vertices are present, triangles 123, 134 and 451 may be constructed. And so on, up to 12 vertices. Other fixed rule for constructing triangles from vertices may be used.

**Figure 3** shows an illustrative example when the cuboid volume and four vertices (bottom-right) are projected along the horizontal axis on a 2D plane (bottom-left). The four vertices are then ordered following a clockwise order relative to the center of the projected cuboid volume (a square). Then, two triangles are constructed following the above fixed rule based on the ordered vertices (top-left).

In the examples of **Figures 2** and **3,** the vertical projection (**Figure 2**) exhibits a 2D total projected surface of triangles on the 2D plane that is maximum (greater than the 2D total projected surface of triangles on the 2D plane resulting from the horizontal projection, **Figure 3**). Thus, the dominant direction is selected as vertical, and the two triangles are constructed from the vertices ordered according to the numbering of those vertices resulting of the vertical projection.

The selection of the dominant direction by maximizing the 2D total projected surface of triangles on the 2D plane leads to a continuous reconstruction of the point cloud without holes.

In the current TriSoup coding scheme, a ray tracing process is performed on each cuboid volume of the tree to render the triangles defined inside each cuboid volume into rendered points representing (modeling) points of the point cloud encompassed in said cuboid volume. The positions of all rendered points by ray tracing will make positions of decoded points of the point cloud. This process is called "voxelization" of the triangles.

Basically, ray racing performed on a triangle of a cuboid volume consists in launching rays along the three directions parallel to axes of the three-dimensional coordinate system as shown on **Figure 4**. Origins of the launched rays are points of integer (voxelized) coordinates of precision corresponding to a sampling precision wanted for the rendering. The intersection (if any, dashed point) of a ray with a triangle is then voxelized (= rounded to the closest point at the wanted sampling precision) and added to the list of rendered points.

After applying the TriSoup coding scheme to the cuboid volumes associated with all the leaf nodes of a tree representing a point cloud geometry, i.e. constructing triangles for each of the cuboid volume and obtaining rendered points by ray tracing, copies of same rendered points in the list of all rendered points are discarded (i.e. only one voxel (rendered point) is kept among all voxels sharing a same three-dimensional position) to obtain a set of decoded (unique) points of the point cloud.

The construction of triangles following a fixed rule based on the ordered vertices may lead to visually awkward results when more than 4 vertices are involved. Actually, other triangles may be constructed for a given set of vertices which are different from the triangles constructed by the above fixed rule leading to different sets of rendered points (different visual aspects of the decoded points of the point cloud). Also, it turns out that reconstructing triangles based on the above fixed rule is not optimal in terms of PSNR (Peak Signal to Noise Ratio) results.

The occupancy information and Trisoup information for a partition of point cloud data are carried on a bitstream either in separate data units of the bitstream or in two separate parts of a same data unit DU. After encoding the bitstream, the compressed point cloud data is delivered over a transmission system such as Internet for example. If there is only one transmission channel in the transmission system, the full bitstream in a whole data unit carrying on octree information (comprising all information for reconstructing an octree structure including occupancy information) of the octree structure is transmitted before transmitting the data unit (or part of a same DU) carrying on Trisoup information of leaf nodes of the octree structure. Since the octree information of a partition of point cloud data is big, thus, latency in transmission of the encoded point cloud geometry data is introduced influencing an application in real-time use case for example, like self-driving car. One straightforward solution is to use two transmission channels in the transmission system, one channel can be used for transmission of occupancy information, the other channel can be used for transmission of Trisoup information. This allows transmission of occupancy information and Trisoup information in parallel avoiding introduction of transmission latency. However, the capacity of channels is not fully used in that case and cause capacity wasting in some cases. Moreover, there are many use cases wherein a single channel is used.

The problem to solve is to reduce the bitstream transmission latency for transmitting occupancy information and Trisoup information of an octree structure when the occupancy and Trisoup information are transmitted over a single transmission channel.

At least one exemplary embodiment of the present application has been devised with the foregoing in mind.

The prior art Document "G-PCC codec description v12", XP030302337 published by ISO/IEC JTC1/SC29/WG 7 on 12-04-2022 was the latest version of the description of the G-PCC codec at the time of filing of the present application and discloses trisoup geometry encoding/decoding in its section 3.3.

<u>SUMMARY</u>

The present invention provides a method of encoding, a method of decoding, a bitstream, an apparatus, a computer program product and a non-transitory storage medium according to the appended claims.

<u>BRIEF DESCRIPTION OF THE DRAWINGS</u>

Reference will now be made, by way of example, to the accompanying drawings which show exemplary embodiments of the present application, and in which:

    **Figure 1** shows schematically a TriSoup cuboid volume comprising four vertices ;

**Figure 2** shows an illustrative example of a process to determine a dominant direction in accordance with current TriSoup ;

**Figure 3** shows an illustrative an example of a process to determine a dominant direction in accordance with current Trisoup;

**Figure 4** shows schematically an example of ray tracing for rendering a point of the point cloud in accordance with one exemplary embodiment ;

**Figure 5** illustrates schematically a Data Unit structure of a bitstream B generated by the encoding method of **Figure 6** in accordance with one exemplary embodiment ;

**Figure 6** illustrates schematically a block diagram of a method 300 of encoding, into a bitstream, position information of points of a point cloud comprised in cuboid volumes associated with leaf nodes of the octree structure, in accordance with an exemplary embodiment ;

**Figure 7** illustrates schematically a block diagram of a method 400 of decoding, from a bitstream, position information of points of a point cloud comprised in cuboid volumes associated with leaf nodes of the octree structure, in accordance with an exemplary embodiment ;

**Figure 8** illustrates schematically a block diagram of a variant of method 300 ;

**Figure 9** illustrates schematically a block diagram of variant of method 400 ;

**Figure 10** illustrates an example of raster scan order of a complete octree structure in a global cube comprising all the points of a point cloud ;

**Figure 11** illustrates an example of a delay introduced by the p child nodes in accordance with exemplary embodiment not part of the invention;

**Figure 12** illustrates an example of a delay introduced by the p child nodes in accordance with exemplary embodiment not part of the invention;

**Figure 13** illustrates a schematic block diagram of an example of a system in which various aspects and exemplary embodiments are implemented.

Similar reference numerals may have been used in different figures to denote similar components.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the scope of the present application.

At least one of the aspects generally relates to point cloud encoding and decoding, one other aspect generally relates to transmitting a bitstream generated or encoded and one other aspects relates to receiving/accessing a decoded bitstream.

Moreover, the present aspects are not limited to MPEG standards such as MPEG-I part 5 or part 9 that relate to the Point Cloud Compression, and may be applied, for example, to other standards and recommendations, whether pre-existing or future-developed, and extensions of any such standards and recommendations (including MPEG-I part 5 and part 9). Unless indicated otherwise, or technically precluded, the aspects described in the present application may be used individually or in combination.

In brief, the present invention provides a method of encoding/decoding, into/from a bitstream comprising at least one data unit, position information of points of a point cloud. Said points are comprised in cuboid volumes associated with leaf nodes of an octree structure having a maximal depth d. At least three vertices are located on edges of each of said cuboid volumes, at most one vertex per edge, and position information of points comprised in a cuboid volume are represented by triangles joining said at least three vertices. The method comprises encoding occupancy information of nodes of the octree structure, said occupancy information being representative of presence of points of the point cloud comprised in said cuboid volumes and for each current cuboid volume comprising at least one point of the point cloud, encoding Trisoup information representative of presence of vertices on edges of the current cuboid volume, and vertices positions along said edges. According to the present invention, occupancy information of a leaf node and Trisoup information of another leaf node are encoded in the data unit in an interleaved way.

The present invention is advantageous because if a single transmission channel is used, the transmission of Trisoup information doesn't need to wait transmission of the occupancy information for the whole nodes of the octree structure before transmitting Trisoup information of a leaf node. Thus, the present invention reduces the transmission latency between encoder and decoder compared to prior art, so the bitstream, generated by the encoding method of the present invention, can be transmitted as quick as possible.

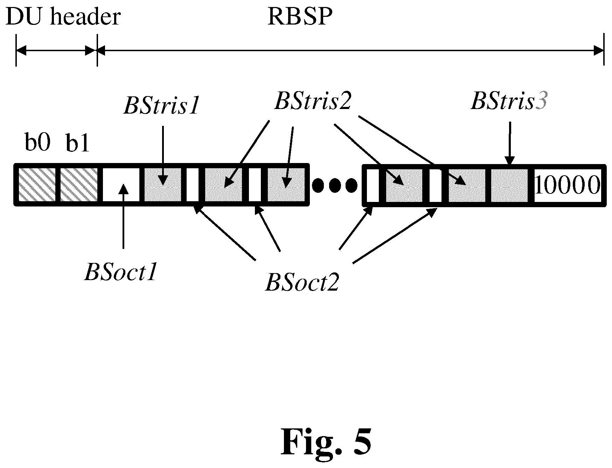

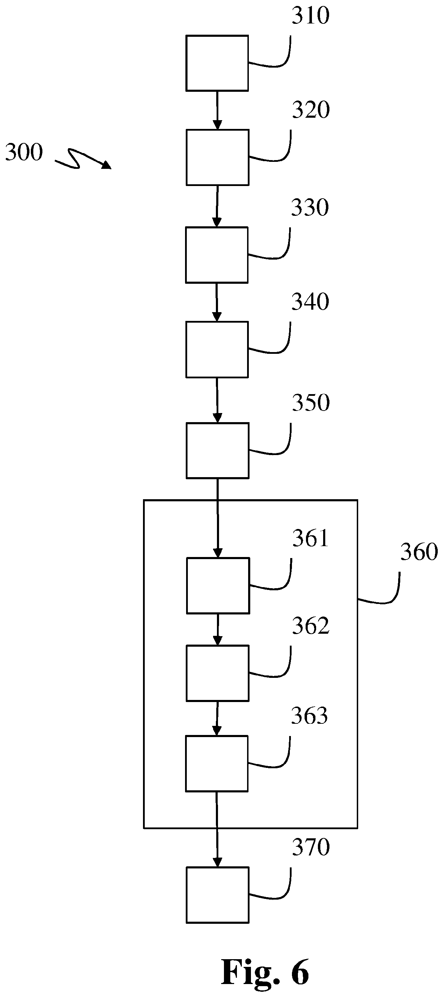

**Figure 5** illustrates schematically a Data Unit structure of a bitstream B generated by the encoding method of **Figure 6** in accordance with an exemplary embodiment.

Assume an octree structure of a point cloud having (d+1) depths, starting from 0-th depth (root node of the octree structure) and ending at d-th depth (last depth). Leaf nodes are located at the last d-th depth of the octree structure and parent nodes of said child nodes are at depth (d-1).

The bitstream B comprises several data units DU, for example one per partition of point cloud data. Each data unit DU is dedicated to a partition of point cloud data, and a point cloud data can be split into several partitions of point cloud data.

The DU structure of **Figure 5** comprises a DU header usually formed by two bytes and a Raw Byte Sequence Payload (RBSP) formed by several series of bits.

The DU header provides information regarding the type of information carries on by the RBSP.

RBSP comprises one series of bits BSoct1 and at least one series of bits BSoct2 representative of occupancy information of nodes of the octree structure which are located either at a depth strictly lower than the depth d or at depth d.

RBSP further comprises one series of bits BStris1, at least one BStris2 and one third series of bits BStris3 presentative of Trisoup information of leaf nodes of the octree structure. Series of bits BSoct2 and BStris2 are interleaved in the data unit DU in accordance with the present invention.

**Figure 6** illustrates schematically a block diagram of a method 300 of encoding, into the bitstream B, position information of points of a point cloud comprised in cuboid volumes associated with leaf nodes of the octree structure, in accordance with an exemplary embodiment.

Basically, method 300 encodes occupancy information of nodes of the octree structure, said occupancy information being representative of presence of points of the point cloud comprised in cuboid volumes associated with nodes of the octree structure. For each current cuboid volume comprising at least one point of the point cloud, method 300 comprises encoding Trisoup information representative of presence of vertices on edges of the current cuboid volume, and vertices positions along said edges.

In step 310, method 300 encodes occupancy information of nodes at previous d depths (from depth 0 to depth d-1) in the series of bits BSoct1.

In step 320, a list $L_{d-1}$ is obtained. The list $L_{d-1}$ stores nodes at depth (d-1) ordered according to an encoding order depending on coordinates of these nodes in a three-dimensional system.

In step 330, one first child node index m is initialized for encoding occupancy information and one second child node index k is initialized for encoding Trisoup information. For example m=k=0.

In step 340, occupancy information of p (integer number) child nodes at depth d of nodes of the list $L_{d-1}$, i.e. occupancy information of p leaf nodes, is encoded in the series of bits BSoct1, starting from first child node (m=0) and ending at the p-th child node(m=p-1). Said child nodes are considered according to the encoding order. Then, k=0 and m=p-1.

Encoding occupancy information of p child nodes before encoding Trisoup information of a leaf node introduces a small delay between occupancy information and Trisoup information encoding. This delay cannot be avoided because encoding Trisoup information of a leaf node needs previous encoding of occupancy information of neighboring nodes, here of the p child nodes. The reason why Trisoup encoding of a node needs occupancy information of neighboring nodes (p child nodes) is caused by feature of Trisoup encoding of each child node.

In step 350, Trisoup information is encoded for the first child node (k=0) of the first node in list $L_{d-1}$ into the series of bits BStris1.

In step 360, encoding in an interleaved way (i.e. alternately) occupancy information in a series of bits BSoct2 and Trisoup information in a series of bits BStris2 of child nodes of nodes of the list $L_{d-1}$ until the occupancy encoding of last child node of the last node of the $L_{d-1}$ (m=Nmax). Then, m=Nmax and k=Nmax-p.

In a sub-step 361 of step 360, the first child index m is increased by 1 and the second child index is also increased by 1 to encode octree information and Trisoup information of a next child node of a node of the list $L_{d-1}$.

Note that the child node index used for occupancy information encoding and the child node index used for Trisoup information encoding are not the same. There is a small latency (delay) between those two child node indices.

In a sub-step 362, occupancy information of a m-th child node is encoded in a series of bits BSoct2, and in sub-step 363, Trisoup information of a k-th child node is encoded in a series of bits BStris2. As is illustrated on **Figure 5,** the series of bits BSoct2 and BStris2 are alternately added in the data unit, i.e. the occupancy information of a m-th child node and the Trisoup information of a k-th child node are encoded in an interleaved way.

Sub-steps 361-363 iterate and at each iteration a series of bits BSoct2 and a series of bits BStris2 are added to the data unit DU in an interleaved way.

In step 370, Trisoup information of the remaining child nodes (p=Nmax-k) is encoded in a series of bits BStris3.

The data unit DU ends by a series of bits for example 10000.

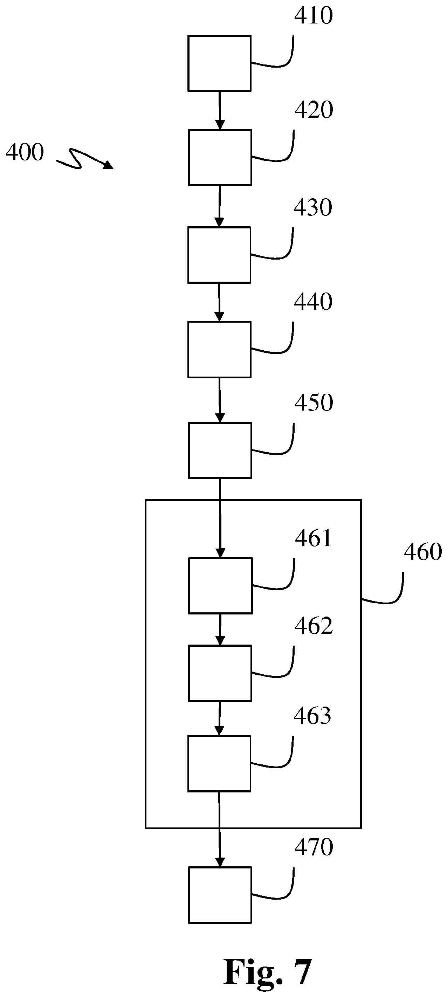

**Figure 7** illustrates schematically a block diagram of a method 400 of decoding, from a bitstream, position information of points of a point cloud comprised in cuboid volumes associated with leaf nodes of the octree structure, in accordance with an exemplary embodiment.

Basically, method 400 decodes occupancy information of nodes of the octree structure, said occupancy information being representative of presence of points of the point cloud comprised in cuboid volumes associated with nodes of the octree structure. For each current cuboid volume comprising at least one point of the point cloud, method 400 comprises decoding Trisoup information representative of presence of vertices on edges of the current cuboid volume, and vertices positions along said edges.

After obtaining a data unit DU of the bitstream B relative to information of a partition of point cloud data, in step 410, method 400 decodes occupancy information of nodes at previous d depths (from depth 0 to depth d-1) from a series of bits BSoct1.

In step 420, a list $L_{d-1}$ is obtained. The list $L_{d-1}$ stores nodes at depth (d-1) ordered according to a decoding order depending on coordinates of these nodes in a three-dimensional system.

In step 430, one first child node index m is initialized for decoding of occupancy information and one second child node index k is initialized for Trisoup information decoding. For example m=k=0.

In step 440, occupancy information of p child nodes at depth d of nodes of the list $L_{d-1}$, i.e. occupancy information of p leaf nodes, is decoded from a series of bits BSoct1 of the data unit DU, starting from first child node (m=0) and ending at the p-th child node(m=p-1). Then, k=0 and m=p-1.

In step 450, Trisoup information is decoded for the first child node (k=0) of the first node in list $L_{d-1}$ from a series of bits BStris1 of the data unit DU.

In step 460, decoding in an interleaved way (i.e. alternately) occupancy information, from a series of bits BSoct2 of the data unit DU, and Trisoup information, from a series of bits BStris2 of the data unit DU, of child nodes of nodes of the list $L_{d-1}$ iterates until occupancy information decoding of the last child node of the last node of the $L_{d-1}$ (m=Nmax). Then, m=Nmax and k=Nmax-p.

In a sub-step 461 of step 460, the first child index m is increased by 1 and the second child index is also increased by 1 to decode octree information and Trisoup information of a next child node of a node of the list $L_{d-1}$.

In a sub-step 462, occupancy information of a m-th child node is decoded from a series of bits BSoct2 of the data unit DU, and in sub-step 463, Trisoup information of a k-th child node is decoded from a second series of bits BStris2 of the data unit DU. As is illustrated on **Figure 5,** the series of bits BSoct2 and BStris2 may be alternately decoded from the data unit DU, i.e. the occupancy information of a m-th child node and the Trisoup information of a k-th child node are decoded in an interleaved way.

Sub-steps 461-463 iterate and at each iteration a series of bits BSoct2 and a series of bits BStris2 are considered in the data unit DU in an interleaved way. In step 470, Trisoup information of the remaining child nodes (p=Nmax-k) is decoded from a series of bits BStris3 of the data unit DU.

The data unit DU ends by a series of bits for example 10000.

According to the invention, iterating of steps 361-363 and 461-463 directly locates next child node in a linear memory structure (like a list) by making use of the property of the linear memory structure that each element in the memory keeps information on how to locate the next and the previous elements.

This is advantageous because it avoids using the child node indices m and k to locate and then iterate each child node.

In one exemplary embodiment not part of the invention, encoding/decoding occupancy information of leaf nodes and encoding/decoding Trisoup information of said leaf nodes are proceeded in parallel.

The embodiment reduces the latency between occupancy information encoding/decoding and Trisoup encoding/decoding.

In one exemplary embodiment not part of the invention, the p child nodes of steps 340 and 440 comprises the child nodes of one point cloud slice (a slice is formed by cuboid volumes having a same coordinate), the child nodes of a tube and a child node locating at a first child node of another tube in another point cloud slice. The number p can be:

$$p = N_{slice} + N_{tube} + 1,$$

where $N_{slice}$ represents the number of child nodes in one point cloud slice and $N_{tube}$ represents the number of child nodes in one tube.

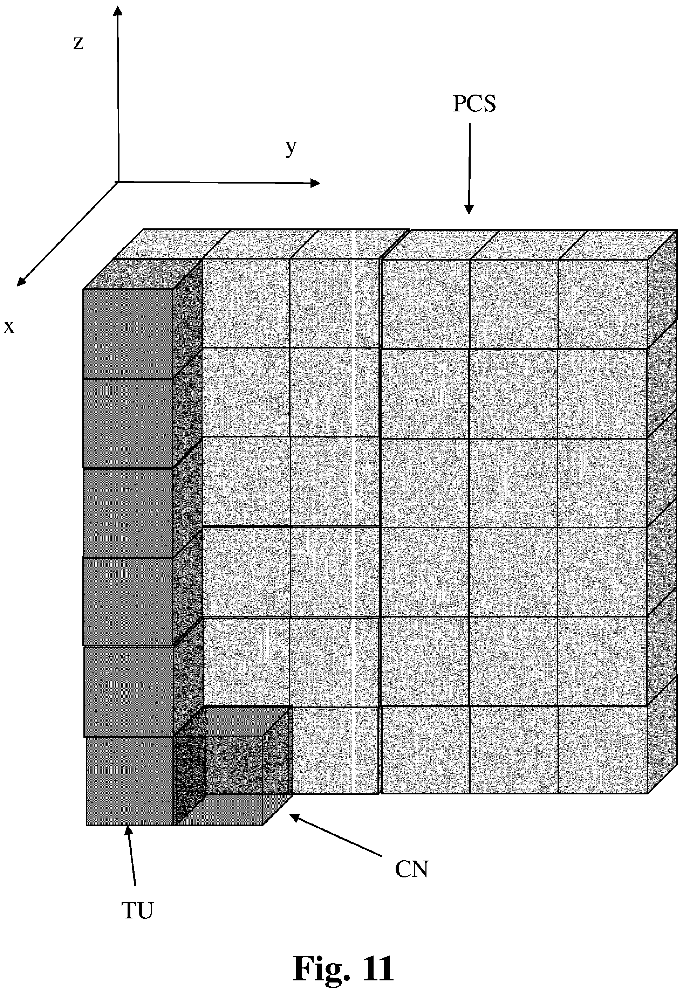

**Figure 11** illustrates an example of 43 child nodes comprising 36 child nodes of a point cloud slice PCS (grey cuboid volume), 6 child nodes of a tube TU and one child node CN located at a first child node of another tube in another point cloud slice.

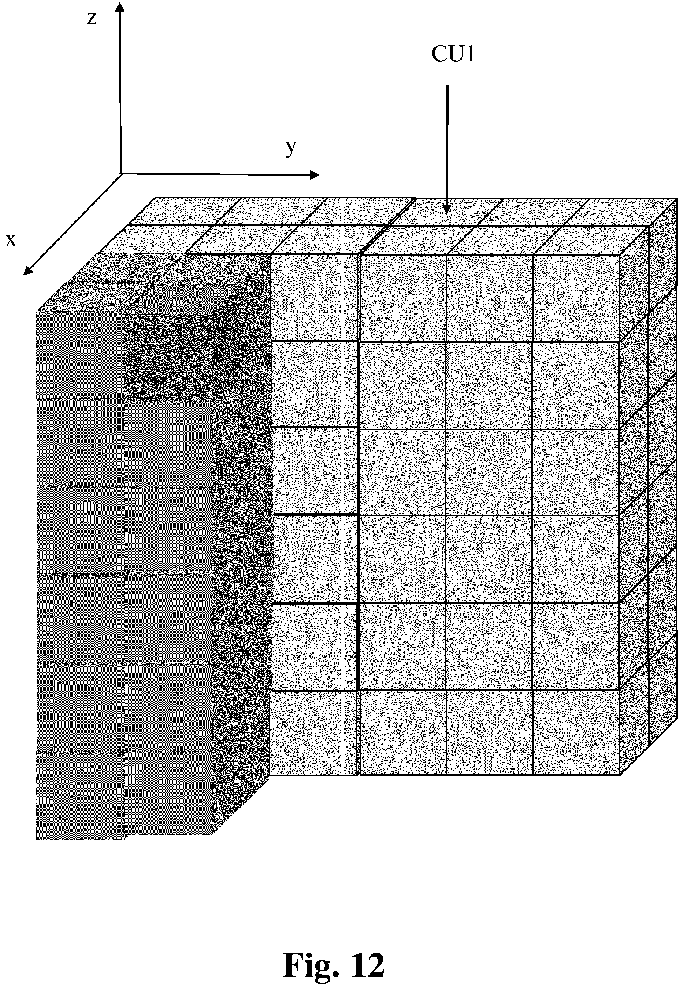

In one exemplary embodiment not part of the invention, the p child nodes of steps 540 and 640 comprises child nodes of nodes which is of same x in list $L_{d-1}$, which is shown in **Figure 12.** As shown in **Figure 12,** the light grey cubes represent child nodes belonging to nodes of x=0, and the middle grey cubes represent child nodes belonging to nodes of x=1, and the cube CU represents the current child node that is being Trisoup coded, and the dark grey cube represents the current child node that is being octree coded, thus, the delay is two slices of child nodes of nodes with same x.

In exemplary embodiments of methods 300 and 400 of **Figures 6 and 7,** the Trisoup information coding uses the same list $L_{d-1}$ to iterate the child nodes of nodes in list $L_{d-1}$ as that used for encoding occupancy information.

In one variant, the node information of child nodes for which the occupancy information is encoded/decoded, is stored in a list (buffer) $L_{tris}$ which can be used later for encoding/decoding Trisoup information of child nodes by iterating child nodes of nodes in the list $L_{tris}$.

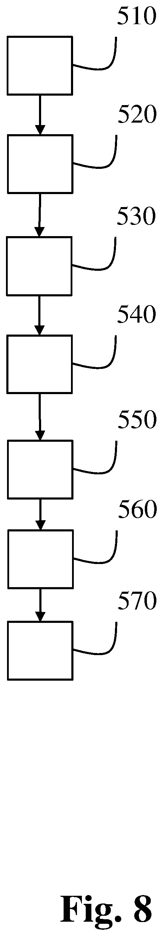

**Figure 8** illustrates schematically a block diagram of a variant of method 300. In step 510, method 300 encodes occupancy information of nodes at previous d depths (from depth 0 to depth d-1) in the first series of bits BSoct1.

In step 520, a list $L_{d-1}$ is obtained. The list $L_{d-1}$ stores nodes at depth (d-1) ordered according to an encoding order depending on coordinates of these nodes in a three-dimensional system.

In step 530, one child node index k is initialized for Trisoup information encoding. For example k=0.

In step 540, nodes at depth (d-1) which have a same coordinate of the three-dimensional system, for example nodes having a same x coordinate, for example x=0, at depth (d-1) are considered. These nodes are ordered according to a first encoding order and their child nodes (at depth d) are ordered according to a second encoding order. Occupancy information of these child nodes is encoded in the series of bits BSoct1 (**Figure 5**). The child nodes of the nodes having a same coordinate are added in the list $L_{tris}$. These child nodes are ordered according to the second encoding order in the list $L_{tris}$.

In step 550, Trisoup information is encoded for the first child node (k=0) of nodes of the list $L_{tris}$ into the series of bits BStris1. At the same time, octree information of the first child node of nodes having a same coordinate x=1 (the coordinate x of the nodes at depth d-1 plus 1) is encoded in the series of BSoct2.

In step 560, encoding in an interleaved way Trisoup information of next child node of nodes having the same updated coordinate x=1, into a second series of bits BStris2 and, occupancy information of next child node (k=k+1) of the list $L_{tris}$ into a series of bits BSoct2 iteratively, until occupancy information encoding the last child node (Nmax-th child nodes) of nodes in list $L_{d-1}$.

At each iteration, when child node occupancy information encoding of nodes having a same coordinate finish, said coordinate is increased by 1 (updated) to encode occupancy information of child node of nodes having this updated coordinate.

In step 570, Trisoup information of the remaining child nodes (Nmax-k) of the list $L_{tris}$ is encoded in the series of bits BStris3.

The data unit DU ends by a series of bits for example 10000.

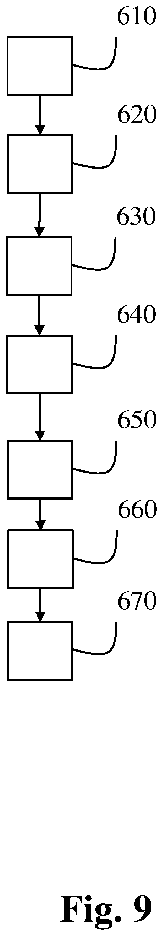

**Figure 9** illustrates schematically a block diagram of variant of method 400.

After obtaining a data unit DU of the bitstream B relative to information of a partition of point cloud data, in step 610, method 400 decodes occupancy information of nodes at previous d depths (from depth 0 to depth d-1) from the series of bits BSoct1.

In step 620, a list $L_{d-1}$ is obtained. The list $L_{d-1}$ stores nodes at depth (d-1) ordered according to a decoding order depending on coordinates of these nodes in a three-dimensional system.

In step 630, one child node index k is initialized for Trisoup information decoding. For example k=0.

In step 640, nodes at depth (d-1) which have a same coordinate of the three-dimensional system, for example nodes having a same x coordinate, for example x=0, at depth (d-1) are considered. These nodes are ordered according to a first decoding order and their child nodes (at depth d) are ordered according to a second decoding order. Occupancy information of these child nodes is decoded from the series of bits BSoct1 (**Figure 5**). The child nodes of the nodes having a same x coordinate are added in the list $L_{tris}$. These child nodes are ordered according to the second decoding order in the list $L_{tris}$.

In step 650, Trisoup information is decoded for the first child node (k=0) of the list $L_{tris}$ from the series of bits BStris1. At the same time, octree information of the first child node of nodes having a same updated coordinate x=1 is decoded from the series of BSoct2.

In step 660, decoding in an interleaved way Trisoup information of next child node of nodes having the same updated coordinate x=1 from a series of bits BStris2 of the data unit DU and, decoding occupancy information of next child node (k=k+1) from a series of bits BSoct2 of the data unit DU until occupancy information decoding the last child node (Nmax-th) child nodes of nodes in list $L_{d-1}$.

At each iteration, when occupancy information decoding of nodes having a same coordinate finish, said coordinate is increased by 1 (updated) to decode occupancy information of nodes having this updated coordinate.

In step 670, Trisoup information of the remaining child nodes (Nmax-k) of the list $L_{tris}$ is decoded from the series of bits BStris3.

The data unit DU ends by a series of bits for example 10000.

In one exemplary embodiment not part of the invention, the occupancy and/or Trisoup information is entropy encoded/decoded.

In one exemplary embodiment, the encoding order and/or the decoding order is/are a Morton order or a raster scan order.

In one exemplary embodiment, the first encoding order and/or the first decoding order and/or the second encoding order and/or the second decoding order is/are a Morton order or a raster scan order.

These last two exemplary embodiments includes that an encoding order and a decoding order are the same.

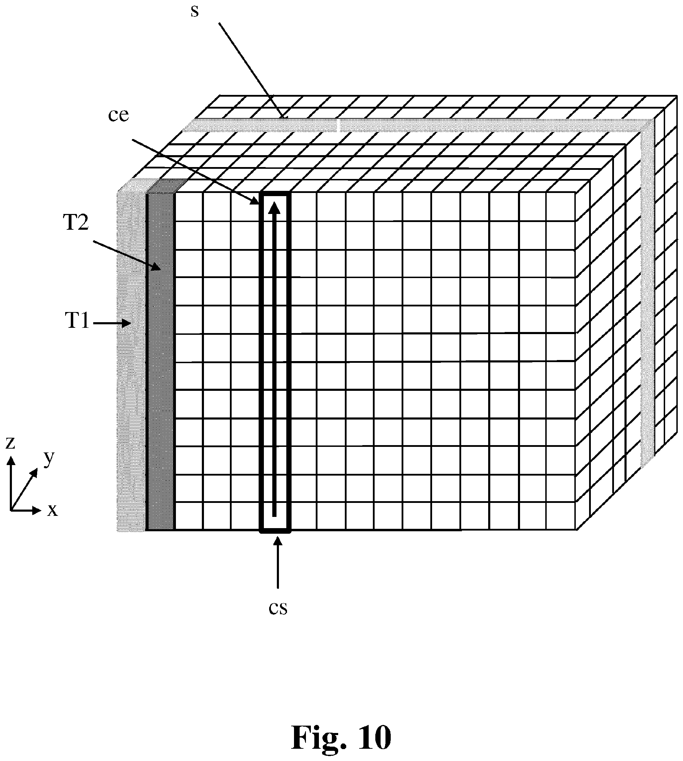

**Figure 10** illustrates an example of raster scan order of a complete octree structure in a global cube comprising all the points of a point cloud.

A cube comprising all the points of a point cloud is split into cuboid volumes. Point cloud slices s are formed by cuboid volumes having a same coordinate, for example y coordinate, of a three-dimensional coordinate system (x,y,z). Each point cloud slice s is split into tubes defined as sets of cuboid volumes having a same coordinate, for example x. Scanning the nodes of octree structure according to a raster scanning order comprises scanning each tube of each point cloud slice s independently of each other. Raster scanning a point cloud slice comprises considering a first cuboid volume cs of a first tube T1 of the point cloud slice, considering the following cuboid volumes of tub T1 until the last cuboid volume ce. Next, consider a first cuboid volume of another tub T2 of the point cloud slice and next the following cuboid volumes of tub T2 until the last cuboid volume of tub T2, etc.

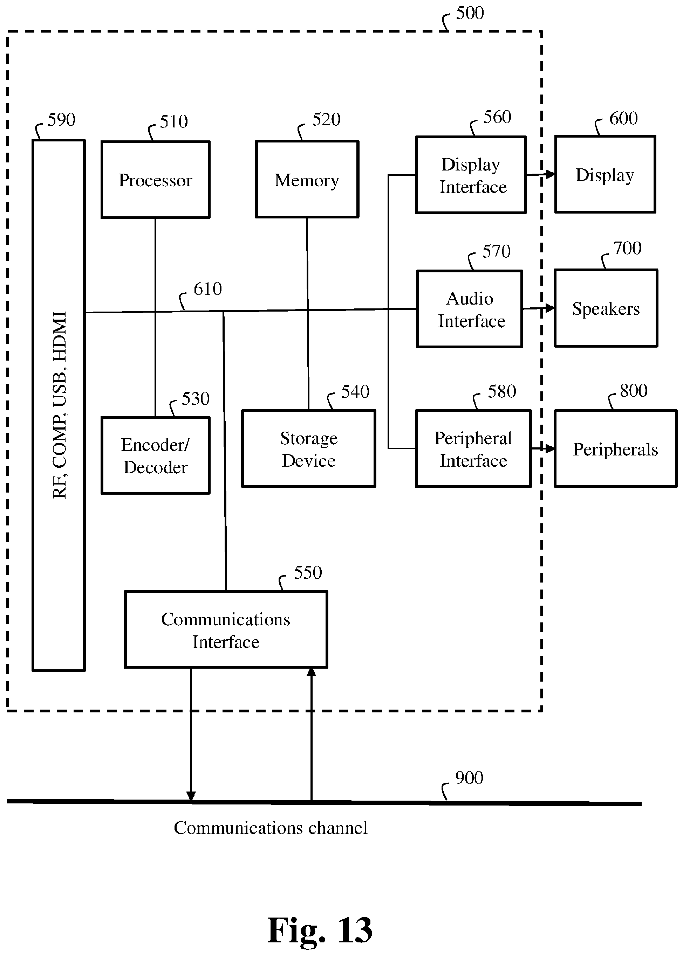

**Figure 13** shows a schematic block diagram illustrating an example of a system in which various aspects and exemplary embodiments are implemented.

System 500 may be embedded as one or more devices including the various components described below. In various embodiments, the system 500 may be configured to implement one or more of the aspects described in the present application.

Examples of equipment that may form all or part of the system 500 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. Elements of system 500, singly or in combination, may be embodied in a single integrated circuit (IC), multiple ICs, and/or discrete components. For example, in at least one embodiment, the processing and encoder/decoder elements of system 500 may be distributed across multiple ICs and/or discrete components. In various embodiments, the system 500 may be communicatively coupled to other similar systems, or to other electronic devices, via, for example, a communications bus or through dedicated input and/or output ports.

The system 500 may include at least one processor 510 configured to execute instructions loaded therein for implementing, for example, the various aspects described in the present application. Processor 510 may include embedded memory, input output interface, and various other circuitries as known in the art. The system 500 may include at least one memory 520 (for example a volatile memory device and/or a non-volatile memory device). System 500 may include a storage device 540, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 540 may include an internal storage device, an attached storage device, and/or a network accessible storage device, as non-limiting examples.

The system 500 may include an encoder/decoder module 530 configured, for example, to process data to provide encoded/decoded point cloud geometry data, and the encoder/decoder module 530 may include its own processor and memory. The encoder/decoder module 530 may represent module(s) that may be included in a device to perform the encoding and/or decoding functions. As is known, a device may include one or both encoding and decoding modules. Additionally, encoder/-decoder module 530 may be implemented as a separate element of system 500 or may be incorporated within processor 510 as a combination of hardware and software as known to those skilled in the art.

Program code to be loaded onto processor 510 or encoder/decoder 530 to perform the various aspects described in the present application may be stored in storage device 540 and subsequently loaded onto memory 520 for execution by processor 510. In accordance with various embodiments, one or more of processor 510, memory 520, storage device 540, and encoder/decoder module 530 may store one or more of various items during the performance of the processes described in the present application. Such stored items may include, but are not limited to, a point cloud frame, encoded/decoded geometry/attributes videos/images or portions of the encoded/decoded geometry/attribute video/images, a bitstream, matrices, variables, and intermediate or final results from the processing of equations, formulas, operations, and operational logic.

In several embodiments, memory inside of the processor 510 and/or the encoder/decoder module 530 may be used to store instructions and to provide working memory for processing that may be performed during encoding or decoding.

In other embodiments, however, a memory external to the processing device (for example, the processing device may be either the processor 510 or the encoder/decoder module 530) may be used for one or more of these functions. The external memory may be the memory 520 and/or the storage device 540, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), HEVC (High Efficiency Video coding), VVC (Versatile Video Coding), or MPEG-I part 5 or part 9.

The input to the elements of system 500 may be provided through various input devices as indicated in block 590. Such input devices include, but are not limited to, (i) an RF portion that may receive an RF signal transmitted, for example, over the air by a broadcaster, (ii) a Composite input terminal, (iii) a USB input terminal, and/or (iv) an HDMI input terminal.

In various embodiments, the input devices of block 590 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 500 to other electronic devices across USB and/or HDMI connections. It is to be understood that various aspects of input processing, for example, Reed-Solomon error correction, may be implemented, for example, within a separate input processing IC or within processor 510 as necessary. Similarly, aspects of USB or HDMI interface processing may be implemented within separate interface ICs or within processor 510 as necessary. The demodulated, error corrected, and demultiplexed stream may be provided to various processing elements, including, for example, processor 510, and encoder/decoder 530 operating in combination with the memory and storage elements to process the data stream as necessary for presentation on an output device.

Various elements of system 500 may be provided within an integrated housing. Within the integrated housing, the various elements may be interconnected and transmit data therebetween using suitable connection arrangement 590, for example, an internal bus as known in the art, including the I2C bus, wiring, and printed circuit boards.

The system 500 may include communication interface 550 that enables communication with other devices via communication channel 900. The communication interface 550 may include, but is not limited to, a transceiver configured to transmit and to receive data over communication channel 900. The communication interface 550 may include, but is not limited to, a modem or network card and the communication channel 900 may be implemented, for example, within a wired and/or a wireless medium.

Data may be streamed to the system 500, in various embodiments, using a Wi-Fi network such as IEEE 802.11. The Wi-Fi signal of these embodiments may be received over the communications channel 900 and the communications interface 550 which are adapted for Wi-Fi communications. The communications channel 900 of these embodiments may be typically connected to an access point or router that provides access to outside networks including the Internet for allowing streaming applications and other over-the-top communications.

Other embodiments may provide streamed data to the system 500 using a set-top box that delivers the data over the HDMI connection of the input block 590.

Still other embodiments may provide streamed data to the system 500 using the RF connection of the input block 590.

The streamed data may be used as a way for signaling information used by the system 500. The signaling information may comprise the bitstream B and/or information such a number of points of a point cloud, coordinates and/or sensor setup parameters.

It is to be appreciated that signaling may be accomplished in a variety of ways. For example, one or more syntax elements, flags, and so forth may be used to signal information to a corresponding decoder in various embodiments.

The system 500 may provide an output signal to various output devices, including a display 600, speakers 700, and other peripheral devices 800. The other peripheral devices 800 may include, in various examples of embodiments, one or more of a stand-alone DVR, a disk player, a stereo system, a lighting system, and other devices that provide a function based on the output of the system 500.

In various embodiments, control signals may be communicated between the system 500 and the display 600, speakers 700, or other peripheral devices 800 using signaling such as AV.Link (Audio/Video Link), CEC (Consumer Electronics Control), or other communications protocols that enable device-to-device control with or without user intervention.

The output devices may be communicatively coupled to system 500 via dedicated connections through respective interfaces 560, 570, and 580.

Alternatively, the output devices may be connected to system 500 using the communications channel 900 via the communications interface 550. The display 600 and speakers 700 may be integrated in a single unit with the other components of system 500 in an electronic device such as, for example, a television.

In various embodiments, the display interface 560 may include a display driver, such as, for example, a timing controller (T Con) chip.

The display 600 and speaker 700 may alternatively be separate from one or more of the other components, for example, if the RF portion of input 390 is part of a separate set-top box. In various embodiments in which the display 600 and speakers 700 may be external components, the output signal may be provided via dedicated output connections, including, for example, HDMI ports, USB ports, or COMP outputs.

In **Figures 1-13,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. As should be clear, the equipment may be mobile and even installed in a mobile vehicle.

Computer software may be implemented by the processor 510 or by hardware, or by a combination of hardware and software. As a non-limiting example, the embodiments may be also implemented by one or more integrated circuits. The memory 520 may be of any type appropriate to the technical environment and may be implemented using any appropriate data storage technology, such as optical memory devices, magnetic memory devices, semiconductor-based memory devices, fixed memory, and removable memory, as non-limiting examples. The processor 510 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the specification are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received point cloud frame (including possibly a received bitstream which encodes one or more point cloud frames) in order to produce a final output suitable for display or for further processing in the reconstructed point cloud domain. In various embodiments, such processes include one or more of the processes typically performed by a decoder. In various embodiments, such processes also, or alternatively, include processes performed by a decoder of various implementations described in this application, for example,

As further examples, in one embodiment "decoding" may refer only to de-quantizing, in one embodiment "decoding" may refer to entropy decoding, in another embodiment "decoding" may refer only to differential decoding, and in another embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input point cloud frame in order to produce an encoded bitstream. In various embodiments, such processes include one or more of the processes typically performed by an encoder. In various embodiments, such processes also, or alternatively, include processes performed by an encoder of various implementations described in this application.

As further examples, in one embodiment "encoding" may refer only to quantizing, in one embodiment "encoding" may refer only to entropy encoding, in another embodiment "encoding" may refer only to differential encoding, and in another embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, this application may refer to "obtaining" various pieces of information. Obtaining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a particular information such a number of points of the point cloud or coordinates or sensor setup parameters. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding, into a bitstream comprising at least one data unit, position information of points of a point cloud, said points being comprised in cuboid volumes associated with leaf nodes of an octree structure having a maximal depth d,

    - at least three vertices being located on edges of each of said cuboid volumes, at most one vertex per edge, and position information of points comprised in a cuboid volume are represented by triangles joining said at least three vertices; the method comprising:

        - encoding occupancy information of nodes from depth 0 to depth d-1 of the octree structure, said occupancy information being representative of presence of points of the point cloud comprised in said cuboid volumes ; and

    for each current cuboid volume comprising at least one point of the point cloud, encoding Trisoup information representative of presence of vertices on edges of the current cuboid volume, and vertices positions along said edges; **characterized in that** occupancy information of a leaf node and Trisoup information of another leaf node are encoded in the data unit (DU) in an interleaved way; wherein the method further comprises obtaining (320) a first list ($L_{d-1}$) which stores nodes at depth d-1 ordered according to an encoding order depending on coordinates of said nodes in a three-dimensional system, and encoding (340) occupancy information of p leaf nodes at depth d of nodes of the first list ($L_{d-1}$) into a series of bits BSoct1 of the data unit (DU); wherein the method further comprises encoding (350) Trisoup information for a first leaf node (k=0) of a first node in the first list ($L_{d-1}$) into a series of bits BStris1 of the data unit (DU); wherein the method further comprises encoding (360) alternately occupancy information, into/-from a series of bits BSoct2 of the data unit (DU), and Trisoup information, into a series of bits BStris2 of the data unit (DU), of leaf nodes of nodes of the first list ($L_{d-1}$) until occupancy information encoding of a last leaf node (Nmax-th leaf node) of nodes in the first list ($L_{d-1}$); wherein the method further comprises encoding (370) Trisoup information of the remaining leaf nodes (p=Nmax-k) in a series of bits BStris3 that is added to the data unit (DU).

2. A method of decoding, from a bitstream comprising at least one data unit, position information of points of a point cloud, said points being comprised in cuboid volumes associated with leaf nodes of an octree structure having a maximal depth d,

    - at least three vertices being located on edges of each of said cuboid volumes, at most one vertex per edge, and position information of points comprised in a cuboid volume are represented by triangles joining said at least three vertices; the method comprising:

        - decoding occupancy information of nodes from depth 0 to depth d-1 of the octree structure, said occupancy information being representative of presence of points of the point cloud comprised in said cuboid volumes ; and

    for each current cuboid volume comprising at least one point of the point cloud, decoding Trisoup information representative of presence of vertices on edges of the current cuboid volume, and vertices positions along said edges; **characterized in that** occupancy information of a leaf node and Trisoup information of another leaf node are decoded from the data unit (DU) in an interleaved way; wherein the method further comprises obtaining (420) a first list ($L_{d-1}$) which stores nodes at depth d-1 ordered according to a decoding order depending on coordinates of said nodes in a three-dimensional system, and decoding (440) occupancy information of p leaf nodes at depth d of nodes of the first list ($L_{d-1}$) from a series of bits BSoct1 of the data unit (DU); wherein the method further comprises decoding (450) Trisoup information for a first leaf node (k=0) of a first node in the first list ($L_{d-1}$) from a series of bits BStris1 of the data unit (DU); wherein the method further comprises decoding (460) alternately occupancy information, from a series of bits BSoct2 of the data unit (DU), and Trisoup information, from a series of bits BStris2 of the data unit (DU), of leaf nodes of nodes of the first list ($L_{d-1}$) until occupancy information decoding of a last leaf node (Nmax-th leaf node) of nodes in the first list ($L_{d-1}$); wherein the method further comprises decoding (470) Trisoup information of the remaining leaf nodes (p=Nmax-k) in a series of bits BStris3 that is added to the data unit (DU).

3. The method of one of claims 1 to 2, wherein the encoding order and/or the decoding order and/or the first encoding order and/or the first decoding order and/or the second encoding order and/or the second decoding order is/are a Morton order or a raster scan order.

4. A bitstream, formatted to include encoded positions of point of a point cloud obtained from a method of one of claims 1, 3 to 3.

5. An apparatus comprising means for performing one of the method claimed in any one of claims 1 to 3.

6. A computer program product including instructions which, when the program is executed by one or more processors, causes the one or more processors to carry out a method claimed in any one of claims 1 to 3.

7. A non-transitory storage medium carrying instructions of program code for executing a method claimed in any one of claims 1 to 3.

**Patentansprüche**

1. Verfahren zum Codieren von Positionsinformationen von Punkten einer Punktwolke in einen Bitstream, der mindestens eine Dateneinheit umfasst, wobei die Punkte in quaderförmigen Volumina enthalten sind, die mit Blattknoten einer Octree-Struktur mit einer maximalen Tiefe d verbunden sind,

- wobei sich mindestens drei Scheitelpunkte auf Kanten jedes der quaderförmigen Volumina befinden, höchstens ein Scheitelpunkt pro Kante, und Positionsinformationen von Punkten, die in einem quaderförmigen Volumen enthalten sind, durch Dreiecke dargestellt werden, die die mindestens drei Scheitelpunkte verbinden; wobei das Verfahren Folgendes umfasst:

    - Codieren von Belegungsinformationen von Knoten von Tiefe 0 bis Tiefe d-1 der Octree-Struktur, wobei die Belegungsinformationen repräsentativ für das Vorhandensein von Punkten der Punktwolke sind, die in den quaderförmigen Volumina enthalten sind; und

    für jedes aktuelle quaderförmige Volumen, das mindestens einen Punkt der Punktwolke umfasst, Codieren von Trisoup-Informationen, die repräsentativ für das Vorhandensein von Scheitelpunkten an den Kanten des aktuellen quaderförmigen Volumens und die Positionen der Scheitelpunkte entlang dieser Kanten sind; **dadurch gekennzeichnet, dass** Belegungsinformationen eines Blattknotens und Trisoup-Informationen eines anderen Blattknotens in der Dateneinheit (DU) interleaved codiert sind; wobei das Verfahren ferner das Erhalten (320) einer ersten Liste ($L_{d-1}$), die Knoten in der Tiefe d-1 speichert, die nach einer Codierungsreihenfolge geordnet sind, die von den Koordinaten der Knoten in einem dreidimensionalen System abhängt, und das Codieren (340) der Belegungsinformationen von p Blattknoten in der Tiefe d der Knoten der ersten Liste ($L_{d-1}$) in eine Reihe von Bits BSoct1 der Dateneinheit (DU) umfasst;

wobei das Verfahren ferner das Codieren (350) von Trisoup-Informationen für einen ersten Blattknoten (k=0) eines ersten Knotens in der ersten Liste ($L_{d-1}$) in eine Reihe von Bits BStris1 der Dateneinheit (DU) umfasst;

wobei das Verfahren ferner das abwechselnde Codieren (360) von Belegungsinformationen in/aus eine/r Reihe von Bits BSoct2 der Dateneinheit (DU) und Trisoup-Informationen in eine Reihe von Bits BStris2 der Dateneinheit (DU) von Blattknoten der Knoten der ersten Liste ($L_{d-1}$) bis zum Codieren der Belegungsinformationen eines letzten Blattknotens (Nmax-ter Blattknoten) der Knoten in der ersten Liste ($L_{d-1}$) umfasst;

wobei das Verfahren ferner das Codieren (370) von Trisoup-Informationen der verbleibenden Blattknoten (p=Nmax-k) in einer Reihe von Bits BStris3 umfasst, die der Dateneinheit (DU) hinzugefügt werden.

2. Verfahren zum Decodieren von Positionsinformationen von Punkten einer Punktwolke aus einem Bitstream, der mindestens eine Dateneinheit umfasst, wobei die Punkte in kubischen Volumen enthalten sind, die mit Blattknoten einer Octree-Struktur mit einer maximalen Tiefe d verbunden sind,

- wobei sich mindestens drei Scheitelpunkte auf Kanten jedes der quaderförmigen Volumina befinden, höchstens ein Scheitelpunkt pro Kante, und Positionsinformationen von Punkten, die in einem quaderförmigen Volumen enthalten sind, durch Dreiecke dargestellt werden, die die mindestens drei Scheitelpunkte verbinden; wobei das Verfahren Folgendes umfasst:

    - Decodieren von Belegungsinformationen von Knoten von Tiefe 0 bis Tiefe d-1 der Octree-Struktur, wobei die Belegungsinformationen repräsentativ für das Vorhandensein von Punkten der Punktwolke sind, die in den quaderförmigen Volumina enthalten sind; und

    für jedes aktuelle quaderförmige Volumen, das mindestens einen Punkt der Punktwolke umfasst, Decodieren von Trisoup-Informationen, die das Vorhandensein von Scheitelpunkten an den Kanten des aktuellen quaderförmigen Volumens und die Positionen der Scheitelpunkte entlang dieser Kanten repräsentieren; **dadurch gekennzeichnet, dass** Belegungsinformationen eines Blattknotens und Trisoup-Informationen eines anderen Blattknotens aus der Dateneinheit (DU) interleaved decodiert werden;

wobei das Verfahren ferner das Erhalten (420) einer ersten Liste ($L_{d-1}$), die Knoten in der Tiefe d-1 speichert, die nach einer Decodierungsreihenfolge geordnet sind, die von den Koordinaten der Knoten in einem dreidimensionalen System abhängt, und das Decodieren (440) von Belegungsinformationen von p Blattknoten in der Tiefe d der Knoten der ersten Liste ($L_{d-1}$) aus einer Reihe von Bits BSoct1 der Dateneinheit (DU) umfasst; wobei das Verfahren ferner das Decodieren (450) von Trisoup-Informationen für einen ersten Blattknoten (k=0) eines ersten Knotens in der ersten Liste ($L_{d-1}$) aus einer Reihe von Bits BStris1 der Dateneinheit (DU) umfasst;

wobei das Verfahren ferner das abwechselnde Decodieren (460) von Belegungsinformationen aus einer Reihe von Bits BSoct2 der Dateneinheit (DU) und Trisoup-Informationen aus einer Reihe von Bits BStris2 der Dateneinheit (DU) von Blattknoten der Knoten der ersten Liste ($L_{d-1}$) bis zum Decodieren der Belegungsinformationen eines letzten Blattknotens (Nmax-ter Blattknoten) der Knoten in der ersten Liste ($L_{d-1}$) umfasst;

wobei das Verfahren ferner das Decodieren (470) von Trisoup-Informationen der verbleibenden Blattknoten (p=Nmax-k) in einer Reihe von Bits BStris3 umfasst, die der Dateneinheit (DU) hinzugefügt wird.

3. Verfahren nach einem der Ansprüche 1 bis 2, wobei die Codierreihenfolge und/oder die Decodierreihenfolge und/oder die erste Codierreihenfolge und/oder die erste Decodierreihenfolge und/oder die zweite Codierreihenfolge und/oder die zweite Decodierreihenfolge eine Morton-Reihenfolge oder eine Rasterscanreihenfolge ist/sind.

4. Bitstream, der so formatiert ist, dass er codierte Positionen von Punkten einer Punktwolke enthält, die durch ein Verfahren nach einem der Ansprüche 1, 3 bis 3 erhalten wurde.

5. Vorrichtung, umfassend Mittel zum Durchführen eines der Verfahren nach einem der Ansprüche 1 bis 3.

6. Computerprogrammprodukt, das Anweisungen beinhaltet, die, wenn das Programm von einem oder mehreren Prozessoren ausgeführt wird, den einen oder die mehreren Prozessoren veranlassen, ein Verfahren nach einem der Ansprüche 1 bis 3 durchzuführen.

7. Nicht flüchtiges Speichermedium, das Anweisungen eines Programmcodes zum Ausführen eines Verfahrens nach einem der Ansprüche 1 bis 3 trägt.

**Revendications**

1. Procédé de codage, dans un flux binaire comprenant au moins une unité de données, d'informations de position de points d'un nuage de points, lesdits points étant compris dans des volumes cuboïdes associés à des nœuds feuilles d'une structure octree ayant une profondeur maximale d,

- au moins trois sommets étant situés sur les arêtes de chacun desdits volumes parallélépipédiques, au plus un sommet par arête, et les informations de position des points compris dans un volume parallélépipédique étant représentées par des triangles joignant lesdits au moins trois sommets ;
le procédé comprenant :

- le codage d'informations d'occupation de nœuds de profondeur 0 à profondeur d-1 de la structure octree, lesdites informations d'occupation étant représentatives de la présence de points du nuage de points compris dans lesdits volumes cuboïdes ; et

pour chaque volume parallélépipédique actuel comprenant au moins un point du nuage de points, le codage des informations Trisoup représentatives de la présence de sommets sur les arêtes du volume parallélépipédique actuel, et des positions des sommets le long desdites arêtes ;
**caractérisé en ce que** les informations d'occupation d'un nœud feuille et les informations Trisoup d'un autre nœud feuille sont codées dans l'unité de données (DU) de manière entrelacée ;
dans lequel le procédé comprend en outre l'obtention (320) d'une première liste ($L_{d-1}$) qui stocke les nœuds à la profondeur d-1 classés selon un ordre de codage dépendant des coordonnées desdits nœuds dans un système tridimensionnel, et le codage (340) des informations d'occupation de p nœuds feuilles à la profondeur d des nœuds de la première liste ($L_{d-1}$) en une série de bits BSoct1 de l'unité de données (DU) ;
dans lequel le procédé comprend en outre le codage (350) d'informations Trisoup pour un premier noeud feuille (k=0) d'un premier noeud dans la première liste ($L_{d-1}$) en une série de bits BStris1 de l'unité de données (DU) ;

dans lequel le procédé comprend en outre le codage (360) en alternance d'informations d'occupation, dans/à partir d'une série de bits BSoct2 de l'unité de données (DU), et d'informations Trisoup, dans une série de bits BStris2 de l'unité de données (DU), de nœuds feuilles d's nœuds de la première liste ($L_{d-1}$) jusqu'à ce que le codage des informations d'occupation d'un dernier nœud feuille (Nmax-ième nœud feuille) des nœuds de la première liste ($L_{d-1}$) soit terminé ;

dans lequel le procédé comprend en outre le codage (370) des informations Trisoup des nœuds feuilles restants (p=Nmax-k) dans une série de bits BStris3 qui est ajoutée à l'unité de données (DU).

2. Procédé de décodage, à partir d'un flux binaire comprenant au moins une unité de données, des informations de position de points d'un nuage de points, lesdits points étant compris dans des volumes cubiques associés à des nœuds feuilles d'une structure octree ayant une profondeur maximale d,

- au moins trois sommets étant situés sur les arêtes de chacun desdits volumes cuboïdes, au plus un sommet par arête, et les informations de position des points compris dans un volume cuboïde étant représentées par des triangles joignant lesdits au moins trois sommets ; le procédé comprenant :

- le décodage d'informations d'occupation de nœuds de la profondeur 0 à la profondeur d-1 de la structure octree, lesdites informations d'occupation étant représentatives de la présence de points du nuage de points compris dans lesdits volumes cuboïdes ; et

pour chaque volume parallélépipédique actuel comprenant au moins un point du nuage de points, décoder les informations Trisoup représentatives de la présence de sommets sur les arêtes du volume parallélépipédique actuel, et les positions des sommets le long desdites arêtes ;

**caractérisé en ce que** les informations d'occupation d'un nœud feuille et les informations Trisoup d'un autre nœud feuille sont décodées à partir de l'unité de données (DU) de manière entrelacée ;

dans lequel le procédé comprend en outre l'obtention (420) d'une première liste ($L_{d-1}$) qui stocke des nœuds à la profondeur d-1 classés selon un ordre de décodage dépendant des coordonnées desdits nœuds dans un système tridimensionnel, et le décodage (440) d'informations d'occupation de p nœuds feuilles à la profondeur d des nœuds de la première liste ($L_{d-1}$) à partir d'une série de bits BSoct1 de l'unité de données (DU) ;

dans lequel le procédé comprend en outre le décodage (450) d'informations Trisoup pour un premier noeud feuille (k=0) d'un premier noeud dans la première liste ($L_{d-1}$) à partir d'une série de bits BStris1 de l'unité de données (DU) ;

dans lequel le procédé comprend en outre le décodage (460) en alternance d'informations d'occupation, à partir d'une série de bits BSoct2 de l'unité de données (DU), et d'informations d' Trisoup, à partir d'une série de bits BStris2 de l'unité de données (DU), de nœuds feuilles de nœuds de la première liste ($L_{d-1}$) jusqu'au décodage des informations d'occupation d'un dernier nœud feuille (Nmax-ième nœud feuille) des nœuds de la première liste ($L_{d-1}$) ;

dans lequel le procédé comprend en outre le décodage (470) des informations Trisoup des nœuds feuilles restants (p=Nmax-k) dans une série de bits BStris3 qui est ajoutée à l'unité de données (DU).

3. Procédé selon l'une des revendications 1 à 2, dans lequel l'ordre de codage et/ou l'ordre de décodage et/ou le premier ordre de codage et/ou le premier ordre de décodage et/ou le deuxième ordre de codage et/ou le deuxième ordre de décodage est/sont un ordre de Morton ou un ordre de balayage tramé.

4. Flux binaire, formaté pour inclure les positions codées d'un point d'un nuage de points obtenu à partir d'un procédé selon l'une des revendications 1, 3 à 3.

5. Appareil comprenant des moyens pour mettre en œuvre l'un des procédés revendiqués dans l'une quelconque des revendications 1 à 3.

6. Produit logiciel comprenant des instructions qui, lorsque le programme est exécuté par un ou plusieurs processeurs, amènent le ou les processeurs à mettre en œuvre un procédé revendiqué dans l'une quelconque des revendications 1 à 3.

7. Support de stockage non transitoire contenant des instructions de code de programme pour exécuter un procédé revendiqué dans l'une quelconque des revendications 1 à 3.

**Fig. 1**

**Fig. 4**

Fig. 2

Fig. 3

Fig. 5

**Fig. 6**

**Fig. 7**

**Fig. 8**

Fig. 9

**Fig. 10**

**Fig. 11**

Fig. 12

**Fig. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- G-PCC codec description v12. *XP030302337*, 12 April 2022